# EUROPÄISCHE PATENTSCHRIFT

(11) **EP 1 616 096 B1**
(45) Veröffentlichungstag und Bekanntmachung des Hinweises auf die Patenterteilung: **05.12.2007**
(21) Anmeldenummer: 04728178.7
(22) Anmeldetag: 19.04.2004
(51) Int. Cl.: F03D 11/04

(54) **Windkraftanlage mit einem Gitterturm**
Wind power plant with a lattice tower
Éolienne avec tour à structure metallique

(30) Priorität: 19.04.2003 DE 10318020
(43) Veröffentlichungstag der Anmeldung: 18.01.2006
(73) Patentinhaber: REpower Systems AG, 22335 Hamburg (DE)
(72) Erfinder: HINZ, Uwe, 25795 Weddingstedt (DE)
(74) Vertreter: Emmel, Thomas
(86) Internationale Anmeldenummer: PCT/EP2004/004137
(87) Internationale Veröffentlichungsnummer: WO 2004/094819

(56) Entgegenhaltungen:
- WO-A-03/083236
- DE-A- 2 735 298
- DE-A- 19 636 240
- GB-A- 292 834
- GB-A- 703 577
- US-A- 4 180 369

## Beschreibung

Die Erfindung betrifft eine Windkraftanlage nach dem Oberbegriff des Anspruchs 1.

Der Gitterturm einer solchen Windkraftanlage weist eine auf dem Gitterturm angeordnete Gondel auf, die die Nabe eines zur Windkraftanlage gehörenden Windrades, einen Generator, Einrichtungen zur Aufbereitung des erzeugten elektrischen Stroms sowie Kontroll- und Steuerungseinrichtungen beherbergt. Sie muß zu jeder Zeit durch Wartungspersonal oder Techniker betreten werden können, um z.B. Wartungsarbeiten durchzuführen oder die Windkraftanlage abzuschalten. Bekannte Gittertürme werden sowohl für Onshore- als auch für Offshore-Windkraftanlagen eingesetzt, wobei unter Onshore-Anlagen auf dem Festland aufgestellte Windkraftanlagen und unter Offshore im Wasser z. B. im Meer aufgestellte Windkraftanlagen verstanden werden.

Zu diesem Zweck weist ein Gitterturm einer Windkraftanlage eine sich in überwiegend vertikaler Richtung am Gitterturm erstreckende Zugangseinrichtung auf, die einen Zugang zur Gondel von einem unterhalb der Gondel liegenden Bereich ermöglicht. Eine solche Zugangseinrichtung kann z.B. aus einer Leiter, einer Treppe, einem Aufzug oder einer Leiter-Aufzug-Kombination bestehen.

In der Regel weist die Zugangseinrichtung gemäß den Unfallverhütungsvorschriften eine Fallschutzeinrichtung zum Schutz der die Zugangseinrichtung benutzenden Person auf. Eine solche Fallschutzeinrichtung kann z.B. aus einer sich entlang einer Leiter erstreckenden, T-förmigen Schiene bestehen, an der ein auf der Schiene gleitender Läufer angeordnet ist. An diesem Läufer ist das eine Ende einer Sicherungsleine befestigt, deren anderes Ende an einem Sicherungsgurt, den die die Zugangseinrichtung benutzenden Person trägt, befestigt ist. Im Falle eines Sturzes verkantet sich der Läufer gegenüber der Schiene und stoppt so den Fall der die Zugangseinrichtung benutzenden Person.

Bei einer Windkraftanlage mit Gitterturm, sind Zugangs- und Fallschutzeinrichtung den Witterungsverhältnissen ungeschützt ausgesetzt. Bei entsprechenden Bedingungen (Temperatur, Wind, Luftfeuchtigkeit, Niederschläge) kann sich auf diesen Einrichtungen - z.B. auf Leitersprossen, Handgriffen, Führungsschienen eines Aufzugs oder dem Läufer einer Fallschutzeinrichtung - ganz oder abschnittsweise Feuchtigkeit niederschlagen. Diese kann zu einer direkten Gefährdung der die Zugangseinrichtung benutzenden Person durch Rutschgefahr führen. Überdies besteht die Gefahr, daß Feuchtigkeit die Wirksamkeit einer Fallschutzeinrichtung stark beeinträchtigt.

Niedergeschlagene Feuchtigkeit kann ferner zu Reifbildung oder zur Vereisung an den genannten Einrichtungen führen, was zu einer noch höheren Gefährdung durch Rutschgefahr führen kann. Eine Fallschutzeinrichtung kann durch Reifbildung oder Vereisung gänzlich außer Funktion gesetzt werden. Eine Begehbarkeit der Gondel ist daher bei Windkraftanlagen mit Gitterturm nicht bei jeglichen Witterungsverhältnissen gewährleistet.

Dieses Problem wird bei Windkraftanlagen mit Rohrtürmen gelöst, indem die Zugangseinrichtung und eine eventuell vorhandene Fallschutzeinrichtung innerhalb des Turmes angeordnet werden, wo sie vor Witterungseinflüssen geschützt sind. Rohrtürme sind jedoch im Vergleich zu Gittertürmen teurer in der Herstellung, im Transport und in der Montage. Hinzu kommt, daß zugunsten höherer Generatorleistungen heutzutage immer größere Rotorblätter verwendet werden, so daß inzwischen in vielen Fällen Türme mit einer Gondelhöhe von über 100 m erforderlich sind. Diese lassen sich aus wirtschaftlichen Gründen nicht als Rohrtürme ausführen, da Rohrtürme mit einer Höhe von über 100 m aus statischen Gründen einen Fußdurchmesser von mehr als 4,3 m haben müssen. Bauelemente diesen Durchmessers können im Straßenverkehr nicht wirtschaftlich transportiert werden, da ihr Maß die übliche Durchfahrtshöhe von Brücken überschreitet. Gittertürme lassen sich dagegen unabhängig von Ihrer Höhe in Elemente zerlegen, die wirtschaftlich im Straßenverkehr transportiert werden können. Sie eignen sich daher für Gondelhöhen von über 100 m besser als Rohrtürme, bergen jedoch die oben genannten Gefahren der witterungsbedingten Beeinträchtigung der Zugangs- und der Fallschutzeinrichtung. Diese Gefahr nimmt im übrigen bei Turmhöhen oberhalb von 100 m aufgrund der geringeren Temperaturen und der höheren Windgeschwindigkeiten noch weiter zu.

Man könnte dem Problem der Reifbildung bzw. der Vereisung durch Beheizen der genannten Einrichtungen begegnen. Eine solche Maßnahme würde jedoch die Wirtschaftlichkeit der Anlage reduzieren. Ebenso würde Feuchtigkeitsniederschlag, der allein schon eine Gefährdung verursachen kann, dadurch nicht verhindert.

Eine weitere Möglichkeit wäre, die genannten Einrichtungen bei entsprechender Witterungslage mit Enteisungsmittel zu besprühen. Dies wäre jedoch mit hohen Kosten verbunden und könnte überdies zu Umweltbelastungen führen. Außerdem würde Enteisungsmittel - ebenso wie niedergeschlagene Feuchtigkeit - allein schon eine Gefährdung verursachen.

DE 27 35298 offenbart eine Windkraftanlage nach dem Oberbegriff des Anspruchs 1.

Die Aufgabe der vorliegenden Erfindung besteht darin, eine Vorrichtung zu schaffen, die eine witterungsbedingte Beeinträchtigung der Zugangseinrichtung effektiv und kostengünstig verhindert. Diese Aufgabe wird mit den Merkmalen des Anspruches 1 gelöst.

Erfindungsgemäß ist vorgesehen, daß die Zugangseinrichtung des Gitterturms zum Schutz vor Witterungseinflüssen mindestens partiell von einer Verkleidung umgeben ist. Die Verkleidung ist dabei so gestaltet, daß sie die Funktion der Zugangseinrichtung nicht beeinträchtigt. Die Zugangseinrichtung kann sowohl im Innern des Turms verlaufen als auch außen am Turm angebracht sein. Bei dem Gitterturm kann es sich sowohl um einen Turm für eine Onshore-Anlage als auch um einen Turm für eine Offshore-Anlage handeln.

In einer vorteilhaften Ausführungsform ist vorgesehen, daß der Turm eine an der Zugangseinrichtung angeordnete Fallschutzeinrichtung aufweist, die ebenfalls mindestens partiell von der Verkleidung umgeben ist und daher gleichfalls vor Witterungseinflüssen geschützt ist.

In einer weiteren vorteilhaften Ausführungsform ist vorgesehen, die erfindungsgemäße Verkleidung so auszugestalten, daß diese ein Vordringen von Feuchtigkeit an die Zugangseinrichtung und/oder die Fallschutzeinrichtung verhindert, so daß sich - z.B. auf Leitersprossen, Handgriffen, Führungsschienen eines Aufzugs oder Schienen der Fallschutzeinrichtung - keine Feuchtigkeit niederschlagen kann. Damit wird Reifbildung bzw. der Vereisung der genannten Einrichtungen vorgebeugt.

Dies geschieht in erster Linie dadurch, daß die Verkleidung direkte Niederschläge (Regen, Hagel, Schnee) fernhält. Gleichzeitig verhindert die Verkleidung aber auch das Vordringen von Nebel bzw. Luft mit einem hohen Feuchtigkeitsgehalt und beugt so indirekten Niederschlägen auf der Zugangseinrichtung und/oder der Fallschutzeinrichtung vor.

In einer weiteren vorteilhaften Ausführungsform ist die Verkleidung so ausgestaltet, daß sie Wind von der Zugangseinrichtung und/oder der Fallschutzeinrichtung fernhält und ein Auskühlen durch Verdunstungskälte verhindert. Dies könnte andernfalls ein Gefrieren niedergeschlagener Feuchtigkeit verursachen. Gleichzeitig schützt die Verkleidung die die Zugangseinrichtung benutzende Person vor in den für Windkraftanlagen üblichen Höhen oftmals starken Winden und erhöht so die Begehungssicherheit und das subjektive Sicherheitsgefühl.

In einer vorteilhaften Ausführungsform ist vorgesehen, daß die Verkleidung die Zugangseinrichtung und/oder die Fallschutzeinrichtung von allen Seiten umgibt, um so das Vordringen von Feuchtigkeit bzw. Windeinwirkung vollständig zu verhindern. Durch geeignete Ausgestaltung der Verkleidung kann dabei überdies ein Kamineffekt erzeugt werden, der für einen ständigen Luftaustausch im Bereich um die Zugangseinrichtung sorgt und so eine Kondensierung der Luftfeuchtigkeit und eine eventuelle spätere Reifbildung oder Vereisung verhindert bzw. ein Abtrocknen der bereits niedergeschlagenen Feuchtigkeit beschleunigt. Der Luftaustausch kann auch durch einen Ventilator erzeugt bzw. verstärkt werden.

Gemäß einer weiteren vorteilhaften Ausführungsform kann die Verkleidung zum Beispiel so ausgebildet sein, dass ihre äußere Oberfläche wärmeabsorbierend ausgebildet ist. So kann zum Beispiel die äußere Oberfläche der Verkleidung einen schwarzen Anstrich aufweisen, so dass die Verkleidung einen größtmöglichen Anteil der auf sie treffenden Wärmestrahlung der Sonne aufnimmt und in Wärme umwandelt. Diese Ausführungsform bietet im Winter den Vorteil, dass dadurch eine Erwärmung innerhalb der Verkleidung erreicht wird, der einem Feuchtigkeitsniederschlag sowie einer Vereisung der Zugangseinrichtung entgegenwirkt.

Damit die wärmeabsorbierende Oberfläche der Verkleidung im Sommer nicht zu einem Wärmestau innerhalb der Verkleidung führt, kann gemäß einer weiteren vorteilhaften Ausführungsform der Erfindung die Verkleidung mindestens eine Öffnung zur Be- und/ oder Entlüftung der Verkleidung aufweisen, die zudem auch der Verbesserung des Kamineffekts dienen kann. Weiterhin kann die Öffnung so ausgebildet sein, dass sie mittels einer Klappe oder mehrerer Klappen ganz oder teilweise verschließbar ist.

In einer weiteren vorteilhaften Ausführungsform ist vorgesehen, daß die Verkleidung die Zugangseinrichtung und/oder die Fallschutzeinrichtung in voller Länge umgibt. Dabei kann sich die Zugangseinrichtung vom Fuß des Turms bis zur Gondel erstrecken. Sie kann jedoch - vom Fuß des Turms aus gesehen - auch erst in einer bestimmten Höhe beginnen, um Unbefugten den Zugang zu erschweren.

In vorteilhaften Ausgestaltungen ist als Zugangseinrichtung eine Leiter, eine Treppe, ein Aufzug oder eine Leiter-Aufzug-Kombination vorgesehen. Bei letzterer wird eine Aufzugkabine rollengelagert an einer konventionellen Leiter auf- und abwärts bewegt; eine solche Einrichtung ist als "kraftbetriebene Leiterbefahranlage" bekannt.

In der Zeichnung ist die Erfindung beispielsweise und schematisch dargestellt.

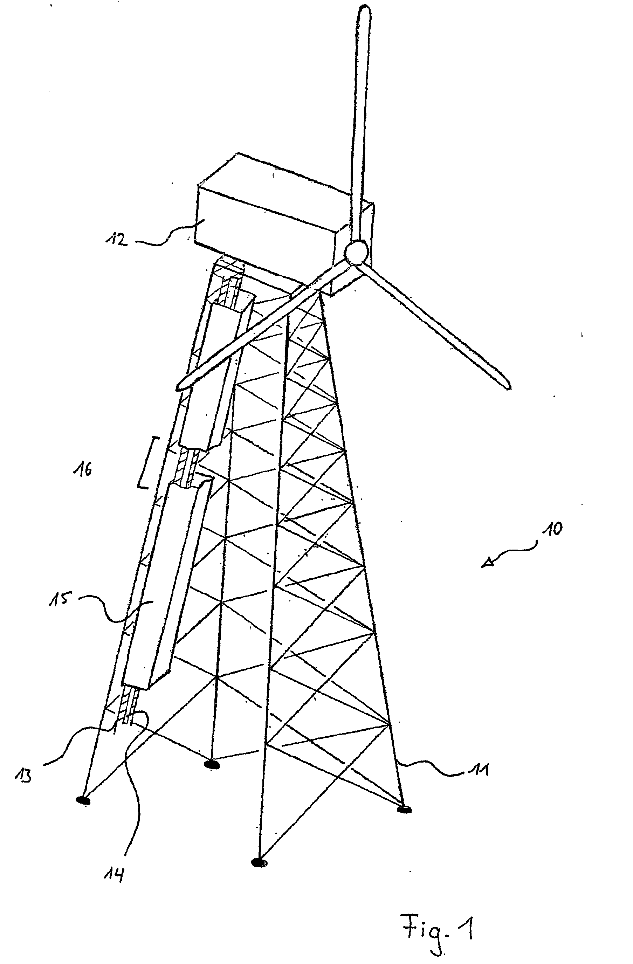

Fig. 1 zeigt eine Windkraftanlage 10 mit einem Gitterturm 11, einer Gondel 12 und einer sich innerhalb des Gitterturms 11 in überwiegend vertikaler Richtung erstreckenden Zugangseinrichtung 13, die hier in Form einer Leiter ausgebildet dargestellt ist. Die Zugangseinrichtung weist die Schiene 14 eines Fallschutzssystems auf. Aus Gründen der Klarheit sind nur an drei der vier Seiten des Gitterturms 11 die für eine Gitterkonstruktion typischen Verstrebungen dargestellt. In der dargestellten Ausführungsform beginnt die Zugangseinrichtung 13 - vom Fuß des Gitterturms 11 aus gesehen - erst in einer bestimmten Höhe, um Unbefugten den Zugang zum Gitterturm 11 zu erschweren.

Die Zugangseinrichtung 13 ist allseitig von einer Verkleidung 15 umgeben, die im Bereich 16 unterbrochen dargestellt ist und so einen Teil der Zugangseinrichtung 13 erkennen läßt. Die Verkleidung 15 kann z.B. aus Kunststoff- oder Metallblech bestehen. Sie verhindert das Vordringen von Feuchtigkeit an die Zugangseinrichtung und schützt sie überdies vor Wind.

In abweichenden Ausführungsformen kann die Zugangseinrichtung 13 und mit ihr die Verkleidung 15 auch außerhalb des Gitterturms 11 angeordnet sein. Sie kann zudem auch in Form einer Treppe, eines Aufzug oder einer Leiter-Aufzug-Kombination ausgebildet sein. Die Zugangseinrichtung 13 kann sich in Abweichung von Fig. 1 auch bis zum Fuß des Gitterturms 11 erstrecken.

Die Verkleidung 15 kann - abweichend von der dargestellten Ausführungsform - die Zugangseinrichtung 13 nur abschnittsweise umgeben, z.B. im besonders wettergefährdeten oberen Bereich. Sie kann die Zugangseinrichtung 13 auch von weniger als allen Seiten umgeben, z.B. nur von den Seiten, die der Witterung am stärksten ausgesetzt sind.

Auch in Verbindung mit Hybridtürmen, die z. B. aus einem Gitterturmabschnitt und einem Rohrturmabschnitt bestehen, ist der Einsatz der vorliegenden Erfindung vorteilhaft. Hierbei muss dann nur der Teil der Zugangseinrichtung die im Bereich des Gitterturmabschnitts liegt von einer Verkleidung umgeben sein, da der in dem Rohrturmabschnitt liegende Bereich im wesentlichen vor Feuchtigkeit geschützt ist und nur bis zum an den Gitterturm angrenzenden Bereich des rohrturmabschnitts entsprechende Maßnahmen vorgesehen werden müssen

## Patentansprüche

1. Eine Windkraftanlage (10), die einen Gitterturm und eine auf dem Gitterturm angeordnete Gondel (12) aufweist, wobei an dem Gitterturm eine sich in überwiegend vertikaler Richtung erstreckende Zugangseinrichtung (13) angeordnet ist, die einen Zugang zur Gondel von einem unterhalb der Gondel liegenden Bereich, insbesondere vom Fuß des Gittertunns (11), ermöglicht, **dadurch gekennzeichnet, daß** die Zugangseinrichtung (13) zum Schutz vor Witterungseinflüssen mindestens partiell von einer Verkleidung (15) umgeben ist.

2. Windkraftanlage nach Anspruch 1, **dadurch gekennzeichnet, daß** der Turm eine an der Zugangseinrichtung (13) angeordnete Fallschutzeinrichtung (14) aufweist, die ebenfalls mindestens partiell von der Verkleidung (15) umgeben ist.

3. Windkraftanlage nach Anspruch 1 oder 2, **dadurch gekennzeichnet, daß** die Verkleidung (15) ein Vordringen von Feuchtigkeit an die Zugangseinrichtung (13) und/oder die Fallschutzeinrichtung (14) verhindert.

4. Windkraftanlage nach Anspruch 1 oder 2, **dadurch gekennzeichnet, daß** die Verkleidung (15) windabweisend ausgebildet ist.

5. Windkraftanlage nach einem der vorhergehenden Ansprüche, **dadurch gekennzeichnet, daß** die Verkleidung (15) die Zugangseinrichtung (13) und/oder die Fallschutzeinrichtung (14) von allen Seiten umgibt.

6. Windkraftanlage nach Anspruch 1 oder 2, **dadurch gekennzeichnet, daß** die Verkleidung (15) die Zugangseinrichtung (13) und/oder die Fallschutzeinrichtung (14) in voller Länge umgibt.

7. Windkraftanlage nach einem der vorhergehenden Ansprüche, **dadurch gekennzeichnet, daß** die Verkleidung (15) eine wärmeabsorbierende äußere Oberfläche aufweist.

8. Windkraftanlage nach einem der vorhergehenden Ansprüche, **dadurch gekennzeichnet, dass** die Verkleidung (15) mindestens eine Öffnung zur Be- und/oder Entlüftung aufweist.

9. Windkraftanlage nach Anspruch 1 oder 2, **dadurch gekennzeichnet, daß** die Zugangseinrichtung (13) eine Leiter, eine Treppe, ein Aufzug oder eine Leiter-Aufzug-Kombination ist.

## Claims

1. A wind power plant (10), which includes a lattice tower and a pod (12) arranged on the lattice tower, wherein arranged on the lattice tower there is an access device (13), which extends predominantly in the vertical direction and enables access to the pod from a region situated below the pod, particularly from the foot of the lattice tower (11), **characterised in that** the access device (13) is surrounded, at least partially, by a cover for the purpose of protection from the effects of the weather.

2. A wind power plant as claimed in claim 1, **characterised in that** the tower includes a falling protection device (14), which is also at least partially surrounded by the cover (15).

3. A wind power plant as claimed in claim 1 or 2, **characterised in that** the cover prevents penetration of moisture to the access device (13) and/or to the fall protection device (14).

4. A wind power plant as claimed in claim 1 or 2, **characterised in that** the cover is constructed to deflect the wind.

5. A wind power plant as claimed in one of the preceding claims, **characterised in that** the cover (15) surrounds the access device (13) and/or the fall protection device (14) on all sides.

6. A wind power plant as claimed in claim 1 or 2, **characterised in that** the cover (15) surrounds the access device (13) and/or the fall protection device (14) over their full length.

7. A wind power plant as claimed in one of the preceding claims, **characterised in that** the cover (15) includes a heat-absorbing outer surface.

8. A wind power plant as claimed in one of the preceding claims, **characterised in that** the cover (15) includes at least one opening for the entry and exit of air.

9. A wind power plant as claimed in claim 1 or 2, **characterised in that** the access device (13) is a ladder, a flight of steps, a lift or a ladder-lift combination.

## Revendications

1. Eolienne (10) présentant une tour à structure métallique et une nacelle (12) agencée sur celle-ci, la tour à structure métallique étant équipée d'un dispositif d'accès (13) d'orientation essentiellement verticale permettant d'accéder à la nacelle par une zone sous-jacente à celle-ci, et notamment à partir du pied de la tour à structure métallique (11), **caractérisée en ce que** le dispositif d'accès (13) est entouré au moins partiellement d'un habillage (15) en guise de protection contre les intempéries.

2. Eolienne selon la revendication 1, **caractérisée en ce que** la tour présente au niveau du dispositif d'accès (13) un dispositif antichute (14) lui aussi entouré au moins partiellement d'un habillage (15).

3. Eolienne selon la revendication 1 ou 2, **caractérisée en ce que** l'habillage (15) empêche la pénétration d'humidité au niveau du dispositif d'accès (13) et/ou du dispositif antichute (14).

4. Eolienne selon la revendication 1 ou 2, **caractérisée en ce que** l'habillage (15) est réalisé de façon à offrir une protection contre le vent.

5. Eolienne selon l'une des revendications précédentes, **caractérisée en ce que** l'habillage (15) entoure le dispositif d'accès (13) et/ou le dispositif antichute (14) de tous les côtés.

6. Eolienne selon la revendication 1 ou 2, **caractérisée en ce que** l'habillage (15) entoure le dispositif d'accès (13) et/ou le dispositif antichute (14) sur toute leur longueur.

7. Eolienne selon l'une des revendications précédentes, **caractérisée en ce que** l'habillage (15) présente une surface extérieure absorbant la chaleur.

8. Eolienne selon l'une des revendications précédentes, **caractérisée en ce que** l'habillage (15) présente au moins une ouverture d'aération et/ou de ventilation.

9. Eolienne selon la revendication 1 ou 2, **caractérisée en ce que** le dispositif d'accès (13) est une échelle, un escalier, un ascenseur ou une combinaison d'une échelle et d'un ascenseur.
